# EUROPEAN PATENT APPLICATION

(11) **EP 4 654 054 A1**
(43) Date of publication of application: **26.11.2025**
(21) Application number: 24177557.6
(22) Date of filing: 23.05.2024
(51) Int. Cl.: G06F 21/51, G06F 21/54, G06F 30/20, G06F 111/02

(54) **GENERATION OF AN EXECUTABLE DATA STRUCTURE FOR STORING A COMPUTER SIMULATION MODEL OF A TECHNICAL SYSTEM**

(71) Applicant: Siemens Aktiengesellschaft, 80333 München (DE)
(72) Inventor: Neveu, Francois, 90491 Nürnberg (DE); Schenk, Tim, 84034 Landshut (DE); Singh, Saurabh Narayan, 81739 München (DE); Zimmermann, Robin, 91301 Kersbach (DE)
(74) Representative: Siemens Patent Attorneys

(57) **Abstract**

The invention relates to a system (100) for generating an executable data structure (DS) for storing a computer simulation model (SIM) of a technical system, the system comprising:
• an input unit (101) that is configured to read in the computer simulation model (SIM) of the technical system,
• a processing unit (102) that is configured to read at least one execution requirement (EXR) for executing the computer simulation model,
• a generator (103) that is configured
o to generate a verification function (VER) for verifying the compliance of the data related to conditions for execution of the computer simulation model (SIM) with the execution requirement (EXR), with the verification function (VER) executing each time the computer simulation model is to be executed,
o to generate a release function (REL) for allowing the execution of the computer simulation model only if the execution requirement (EXR) is met,
and,
o to generate the executable data structure (DS) comprising the verification function (VER), the release function (REL), and the computer simulation model (SIM),
and,
• an output unit (104) that is configured to output the executable data structure (DS).

## Description

The invention relates to a system and computer-implemented method for generating an executable data structure for storing a computer simulation model of a technical system, the executable data structure adapted for storing a computer simulation model of a technical system, and a computer-implemented method for using a computer simulation model that is stored in such executable data structure. Furthermore, a computer program product for performing the steps of one of the methods is claimed.

For technical systems, e.g., industrial/mechatronic systems comprising industrial/mechatronic components like e.g. drives, robots, valves, machines, field devices, sensors, etc., computer simulation models can be composed having multiple individual simulation model components. These simulation model components can be provided by different users, possibly using different simulation tools. However, providers usually use existing standardized interfaces, e.g., Functional Mock-Up Interface (FMI) to improve the exchange of model components with different users. Such standards focus on the proper execution and performance of simulation models. However, providers of models can usually not control the usage of the simulation model by another user, e.g., it can be difficult to implement execution restrictions. On the other hand, users of the simulation model might want to update model, to check originality of a computer simulation model and/or verify a creator of a model.

It is therefore an objective of the present invention to provide a controlled exchange of a computer simulation model between different parties.

The objective is solved by the features of the independent claims. The dependent claims contain further developments of the invention.

The invention provides according to a first aspect a system for generating an executable data structure for storing a computer simulation model of a technical system, the system comprising:
- an input unit that is configured to read in the computer simulation model of the technical system,
- a processing unit that is configured to read in at least one execution requirement for executing the computer simulation model,
- a generator that is configured
   ∘ to generate a verification function for verifying the compliance of data related to a condition for execution of the computer simulation model with the execution requirement, with the verification function executing each time the computer simulation model is to be executed,
   ∘ to generate a release function for allowing the execution of the computer simulation model only if the execution requirement is met, and,
   ∘ to generate the executable data structure comprising the verification function, the release function, and the computer simulation model, and,
- an output unit that is configured to output the executable data structure.

It is an advantage of the present invention that an executable data structure is provided that comprises a computer simulation model, that can only be accessed/executed if execution requirements by a provider and/or by a user are met. To this end, the proposed invention provides a control mechanism implemented in the executable data structure. The computer simulation model is preferable wrapped in the executable data structure such that it cannot be extracted from the executable data structure without rendering it unusable.

Furthermore, the mechanism is customizable such that a provider and/or a user of the computer simulation model can implement specific requirements for execution of the computer simulation model without the need of adapting a specific simulation tool. The executable data structure is preferably configured such that it can be easily used in any simulation tool, i.e., it is tool-agnostic. The simulation model itself remains unchanged.

According to an embodiment of the invention the execution requirement can be provided by a provider of the computer simulation model and/or by a user.

According to an embodiment of the invention the processing unit can be configured to check the execution requirement by the user against the execution requirement of the provider and only the execution requirement that is consistent with the execution requirement of the provider are provided as input for the verification function.

According to an embodiment of the invention, the at least one execution requirement relates to:
- temporal and/or local usage restrictions for using the computer simulation model,
- tracking and tracing the usage of the computer simulation model,
- disablement of the computer simulation model,
- verification of a user of the computer simulation model,
- verification of ownership of the computer simulation model,
- verification of the provider of the computer simulation model,
- updating the computer simulation model, and/or
- access management for using the computer simulation model.

According to an embodiment of the invention the computer simulation model can comply with an open simulation API (OSAPI) standard.

Preferably, the computer simulation model is built as an executable following an open simulation API (OSAPI), such as for example FMI.

According to an embodiment of the invention extracting the computer simulation model from the executable data structure, if the execution requirements are not met, may result in the computer simulation model becoming no longer executable.

According to an embodiment of the invention the data structure can comply with an OSAPI standard.

Therefore, the computer simulation model is preferably wrapped in an executable functional outer layer that is conform to the same OSAPI as the original model, e.g., FMI standard.

The invention provides according to a second aspect a computer-implemented method for generating an executable data structure for storing a computer simulation model of a technical system, the method comprising the steps:
- reading in the computer simulation model of the technical system,
- reading in at least one execution requirement for executing the computer simulation model,
- generating a verification function for verifying the compliance of data related to a condition for the execution of the computer simulation model with the execution requirement, with the verification function executing each time the computer simulation model is to be executed,
- generating a release function for allowing the execution of the computer simulation model only if the execution requirement is met,
- generating the executable data structure comprising the verification function, the release function, and the computer simulation model, and
- outputting the executable data structure.

The invention provides according to another aspect an executable data structure adapted for storing a computer simulation model of a technical system, the data structure comprising:
- the computer simulation model of the technical system,
- a verification function for verifying the compliance of data related to a condition for execution of the computer simulation model with a given execution requirement, with the verification function executing each time the computer simulation model is to be executed, and
- a release function for allowing the execution of the computer simulation model only if the execution requirement is met.

The invention provides according to another aspect a computer-implemented method for using a computer simulation model that is stored in an executable data structure, comprising the method steps:
- reading in the executable data structure by a processor, wherein the executable data structure comprises:
   ∘ the computer simulation model of the technical system,
   ∘ a verification function for verifying the compliance of a condition for the execution of the computer simulation model with a given execution requirement, with the verification function executing each time the computer simulation model is to be executed,
   ∘ a release function for allowing the execution of the computer simulation model only if the execution requirement is met,
- reading in data related to a condition for the execution of the computer simulation model,
- executing the executable data structure, wherein the verification function and subsequently the release function are executed, and
- executing the computer simulation model only if the execution requirement is met.

In addition, the invention provides a computer program product (non-transitory computer readable storage medium having instructions, which when executed by a processor, perform actions) having program instructions for performing the aforementioned method.

The invention will be explained in more detail by reference to the accompanying figures.
- Fig. 1:: shows an exemplary embodiment of a system for generating an executable data structure for storing a computer simulation model of a technical system and the executable data structure;
- Fig. 2:: shows an exemplary embodiment of a computer-implemented method for generating an executable data structure for storing a computer simulation model of a technical system; and
- Fig. 3:: shows an exemplary embodiment of a computer-implemented method for using a computer simulation model that is stored in an executable data structure.

Equivalent parts in the different figures are labeled with the same reference signs. All of the described and/or drawn features as shown by the embodiments can be advantageously combined within the scope of the invention.

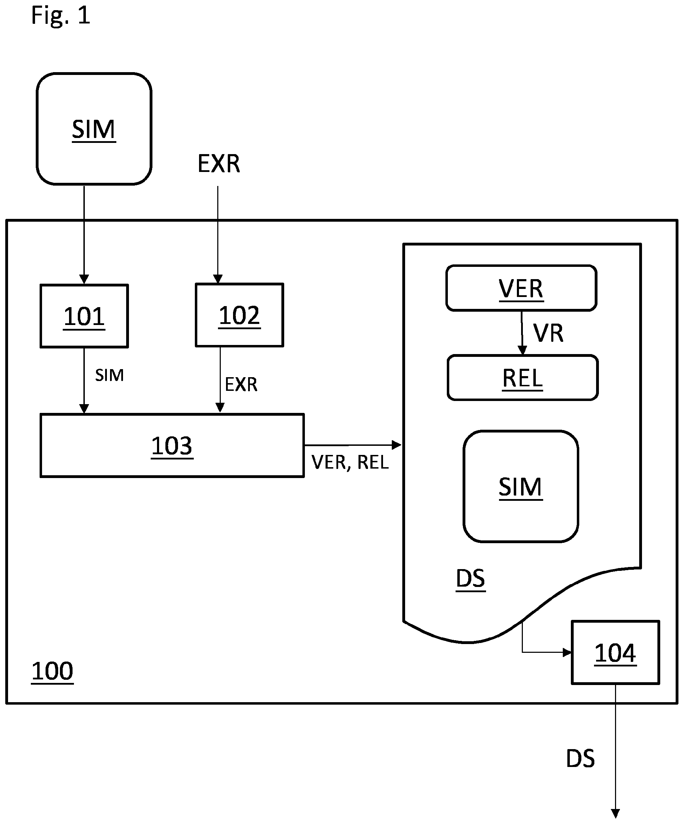

Figure 1 schematically shows an embodiment of a system 100 for generating an executable data structure DS for storing a computer simulation model SIM of a technical system and the executable data structure DS.

A technical system can be for example an industrial system, such as a factory, a machine or device, an automation system, or a component thereof. The computer simulation model SIM is for example adapted to simulate a physical performance and/or function of the technical system.

The system 100 comprises an input unit 101, a processing unit 102, a generator 103, and an output unit 104. Furthermore, the system 100 can comprise at least one processor. The system 100 can therefore comprise software and/or hardware components.

The input unit 101 is configured to read in the computer simulation model SIM of the technical system. Preferably the computer simulation model SIM is executable, i.e., it is provided as an executable data structure itself, and complies with an OSAPI standard like FMI. The computer simulation model can be for example provided as a Functional Mock-up Unit (FMU) following the Functional Mock-up Interface (FMI) standard.

The processing unit 102 is configured to read in at least one execution requirement EXR for executing the computer simulation model. Preferably, the execution requirement EXR is provided by a provider of the computer simulation model SIM and/or by a user of the computer simulation model SIM.

The processing unit 102 can be configured to check the execution requirement(s) EXR by the user against the execution requirement(s) of the provider and to provide only the execution requirement(s) that are consistent with the execution requirement(s) of the provider.

Alternatively, it is also possible that the user and the provider agree on matching execution requirements EXR and only those are read in by the processing unit 102.

The execution requirement EXR can for example relate to:
- temporal and/or local usage restrictions for using the computer simulation model, e.g., allowing usage of the computer simulation model only within a given time period, and/or at a given location (e.g., country),
- tracking and tracing the usage of the computer simulation model, e.g., allowing logging of data of the computer simulation model when executed,
- disablement of the computer simulation model, e.g., after a given time period, date, and/or in the event of a specific event,
- verification of a user of the computer simulation model, e.g., checking if user has access and/or usage rights,
- verification of ownership of the computer simulation model, e.g., checking if provider is specified owner of the computer simulation model,
- verification of the provider of the computer simulation model, checking if provider is for example a certified provider of the computer simulation model,
- updating the computer simulation model, e.g., checking version number of computer simulation model and updating accordingly, and/or
- access management for using the computer simulation model, e.g., allowing access for a specified number of users.

The generator 103 receives the computer simulation model SIM and the execution requirement(s) EXR. The generator 103 is configured to generate to generate a verification function VER for verifying the compliance of at least one condition for execution of the computer simulation model SIM with the at least one execution requirement EXR. A condition for execution is for example a computing location (e.g., computing center location) where the computer simulation model is to be executed. Data related to the condition for execution can therefore be for example location information, time information, user information etc.

The verification function VER is configured that it is executed each time the computer simulation model SIM is to be executed. The generator 103 is further configured to generate a release function REL for allowing the execution of the computer simulation model only if the execution requirement EXR is met, i.e., only if data related to at least one condition for execution of the computer simulation model meet the execution requirement EXR the computer simulation model is released/can be executed. The verification function VER therefore provides a comparison of the data related to the execution condition with the execution requirement. For example, if the execution requirement specifies a period of time during which the computer simulation model is allowed to run, the verification function compares the actual date with the specified time period and returns a verification result.

The release function receives the verification result VR from the verification function. The release function allows execution of the computer simulation model if the verification result is positive, i.e., the execution condition(s) meets the execution requirement(s).

The generator 103 is further configured to generate the executable data structure DS that comprises the verification function VER, the release function REL, and the computer simulation model SIM. The computer simulation model SIM is hence wrapped in the executable data structure DS.

Preferably the computer simulation model SIM is wrapped in the executable data structure DS such that extracting the computer simulation model SIM from the executable data structure DS results in the computer simulation model becoming no longer executable if the execution requirement is not met.

The output unit 104 that is configured to output the executable data structure DS. The executable data structure DS can then be read in by a simulation tool and the verification function VER is executed to check execution conditions against the execution requirements. The executable data structure DS preferably complies with an OSAPI standard, e.g., FMI. The executable data structure DS is hence adapted for storing the computer simulation model SIM of a technical system, the data structure DS comprising:
- the computer simulation model SIM of the technical system,
- the verification function VER for verifying the compliance of data related to a condition for execution of the computer simulation model with a given execution requirement, with the verification function executing each time the computer simulation model is to be executed, and
- the release function REL for allowing the execution of the computer simulation model SIM only if the execution requirement is met.

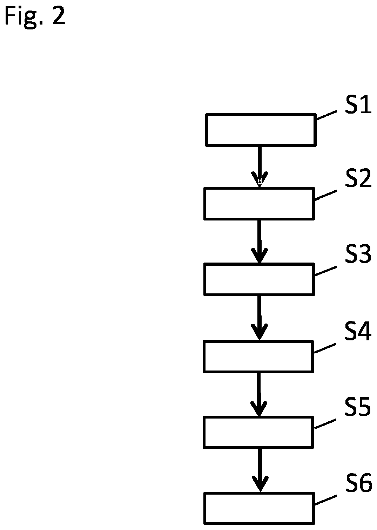

Figure 2 shows an exemplary embodiment of a computer-implemented method for generating an executable data structure DS for storing a computer simulation model SIM of a technical system.

The method comprises the following steps:
In a first step S1 the computer simulation model of the technical system is read in. Preferably, the computer simulation model is provided in an FMI standard form by a provider of the computer simulation model.

In the next step S2 at least one execution requirement for executing the computer simulation model is read in. The execution requirement can be provided either by the provider/creator and/or by the user of the computer simulation model.

For example, the creator can add execution requirements for the specific computer simulation model, wherein a user can later choose from the specified requirements and/or specify to his/her needs. This includes e.g. utilization restrictions, control and tracking mechanisms, debugging and logging functionalities and model upgrade management. A user who requests the specific simulation model can for example customize the execution requirements.

For example, a provider can provide execution requirements as follows: the computer simulation model is capable of an update notification, it is capable of logging & debugging information, it can be licensed for up to two years, for up to ten different devices by specifying a MAC address and requires an exchange over the internet every three months. For example, the user who wants to retrieve the computer simulation model, can specify his/her execution requirements as follows: update possibility, no logging & debugging information, registers five MAC addresses on which the user wants to use the model for the next two years. The provider-specific and user-specific execution requirements are preferably checked against each other and matching execution requirements are then provided for the next step S3.

In the next step S3 a verification function for verifying the compliance of given data related to a condition for the execution of the computer simulation model with the execution requirements is generated. The verification function is configured such that it is called and executed each time the computer simulation model is to be executed.

In the next step S4 a release function is generated. The release function is configured to allow the execution of the computer simulation model only if the execution requirement is met by given data related to the condition for execution of the computer simulation model.

In the next step S5 the executable data structure is generated, wherein the executable data structure comprises the verification function, the release function, and the computer simulation model. Preferably, the same FMI interface versions as the original FMU of the computer simulation model is implemented. The executable data structure is compiled in an FMU.

In other words, by applying the given execution requirements the unmodified original model is wrapped in an executable functional outer shell / layer, which is conform to the same OSAPI as the original computer simulation model, e.g. FMI. The wrapper is preferably applied in such a way that the original computer simulation model is not extractable from the executable data structure without making it unusable.

In the next step S6 the executable data structure is provided. The executable data structure can then be used for controlled exchange of the computer simulation model as specified by the execution requirement.

A user can then request the computer simulation model and receives the executable data structure. The user can then execute the executable data structure in a preferred simulation tool, as the executable data structure offers the identical OSAPI as the computer simulation model. When the executable data structure is executed, the verification function enforces the built-in execution requirements, e.g., during the initialization phase of the simulation model. This way the runtime performance during the simulation is not affected by the executable data structure, as all runtime calls to the executable data structure are directly routed to the original model and back. Preferably, the verification of the execution requirements requires data from a verification and management service, such as user identification data for user verification. Such verification server can be at least partly based on an internet server and/or a database, to which both, provider and user of the simulation model, have access. Thus, the exchange of the simulation model may require access to the internet.

The user can for example then check the signature of the received computer simulation model with the verification and management service to ensure that the model is the correct one from the desired provider and has not been altered. Then he can import the received FMU into his FMI-supporting authoring tool. When executed, the executable data structure checks the MAC address etc. If an internet connection to the verification service is available, update information for updating the computer simulation model can be collected and implemented.

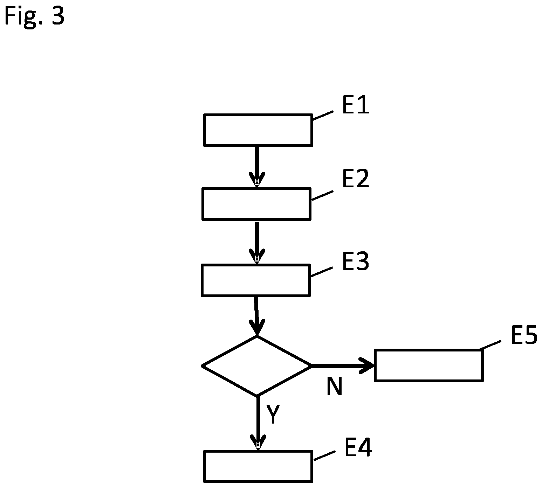

Figure 3 shows an exemplary embodiment of a computer-implemented method for using a computer simulation model that is stored in an executable data structure, as for example shown in Fig. 1.

The method can be for example be implemented by a simulation tool and comprises the following steps:
In a first step E1 the executable data structure is read in by a processor. The executable data structure comprises:
- the computer simulation model SIM of the technical system,
- a verification function VER for verifying the compliance of data related to at least one condition for the execution of the computer simulation model with a given execution requirement, with the verification function executing each time the computer simulation model is to be executed, and
- a release function for allowing the execution of the computer simulation model only if the execution requirement is met.

In a next step E2 data related to at least one condition for the execution of the computer simulation model are read in. Data related to at least one condition for the execution of the computer simulation model can be for example user data, time data, location data, data about a processing unit etc. The data can also be provided by a data service unit that is configured to provide data related to conditions of execution of the computer simulation model. The data service unit can be for example implemented as a verification and management service and can be accessible via internet. In particular, the data service unit provides data, such as verification data, sensor data, etc., that is required as input for the verification function.

In the next step E3 the executable data structure is executed, wherein the verification function and subsequently the release function are executed. Therefore, when executing the verification function, all given execution requirements are checked against the data related to conditions for the execution of the computer simulation model. In other words, when executing the verification function, the compliance of the data with the execution requirement(s) is verified.

In case Y the execution requirements are met by the data, the release function releases the computer simulation model, i.e., allows access to the computer simulation model, and in the next step E4 the computer simulation model is executed.

In case N the execution requirements are not met, the release function denies access and/or execution of the computer simulation model. Preferably, in this case N, extracting the computer simulation model from the executable data structure results in the computer simulation model becoming no longer executable.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

## Claims

1. System (100) for generating an executable data structure (DS) for storing a computer simulation model (SIM) of a technical system, the system comprising:
a. an input unit (101) that is configured to read in the computer simulation model (SIM) of the technical system,
b. a processing unit (102) that is configured to read in at least one execution requirement (EXR) for executing the computer simulation model,
c. a generator (103) that is configured
i. to generate a verification function (VER) for verifying the compliance of data related to a condition for execution of the computer simulation model (SIM) with the execution requirement (EXR), with the verification function (VER) executing each time the computer simulation model is to be executed,
ii. to generate a release function (REL) for allowing the execution of the computer simulation model only if the execution requirement (EXR) is met, and,
iii. to generate the executable data structure (DS) comprising the verification function (VER), the release function (REL), and the computer simulation model (SIM),
and,
d. an output unit (104) that is configured to output the executable data structure (DS).

2. System (100) according to claim 1, wherein the execution requirement (EXR) is provided by a provider of the computer simulation model and/or by a user.

3. System (100) according to claim one of the preceding claims, wherein the processing unit (102) is configured to check the execution requirement (EXR) by the user against the execution requirement of the provider and only the execution requirement that is consistent with the execution requirement of the provider are provided as input for the verification function (VER).

4. System (100) according to one of the preceding claims, wherein the at least one execution requirement (EXR) relates to:
a. temporal and/or local usage restrictions for using the computer simulation model,
b. tracking and tracing the usage of the computer simulation model,
c. disablement of the computer simulation model,
d. verification of a user of the computer simulation model,
e. verification of ownership of the computer simulation model,
f. verification of the provider of the computer simulation model,
g. updating the computer simulation model, and/or
h. access management for using the computer simulation model.

5. System (100) according to one of the preceding claims, wherein the computer simulation model (SIM) complies with an open simulation API standard.

6. System (100) according to one of the preceding claims, wherein extracting the computer simulation model (SIM) from the executable data structure (DS), if the execution requirements are not met, results in the computer simulation model becoming no longer executable.

7. System (100) according to one of the preceding claims, wherein the data structure (DS) complies with an open simulation API standard.

8. Computer-implemented method for generating an executable data structure (DS) for storing a computer simulation model (SIM) of a technical system,
the method comprising the steps:
a. reading (S1) in the computer simulation model (SIM) of the technical system,
b. reading in (S2) at least one execution requirement (EXR) for executing the computer simulation model,
c. generating (S3) a verification function (VER) for verifying the compliance of data related to a condition for the execution of the computer simulation model with the execution requirement, with the verification function executing each time the computer simulation model is to be executed,
d. generating (S4) a release function (REL) for allowing the execution of the computer simulation model only if the execution requirement is met,
e. generating (S5) the executable data structure (DS) comprising the verification function (VER), the release function (REL), and the computer simulation model (SIM), and
f. outputting (S6) the executable data structure (DS).

9. Executable data structure (DS) adapted for storing a computer simulation model (SIM) of a technical system, the data structure comprising:
a. the computer simulation model (SIM) of the technical system,
b. a verification function (VER) for verifying the compliance of data related to a condition for execution of the computer simulation model with at least one given execution requirement, with the verification function executing each time the computer simulation model is to be executed,
and
c. a release function (REL) for allowing the execution of the computer simulation model only if the execution requirement is met.

10. Computer-implemented method for using a computer simulation model that is stored in an executable data structure, comprising the method steps:
a. reading in (E1) the executable data structure (DS) by a processor, wherein the executable data structure (DS) comprises:
i. the computer simulation model (SIM) of the technical system,
ii. a verification function (VER) for verifying the compliance of data related to a condition for the execution of the computer simulation model with at least one given execution requirement, with the verification function executing each time the computer simulation model is to be executed,
iii. a release function (REL) for allowing the execution of the computer simulation model only if the execution requirement is met,
b. reading in (E2) data related to a condition for the execution of the computer simulation model,
c. executing (E3) the executable data structure, wherein the verification function and subsequently the release function are executed,
and
d. executing (E4) the computer simulation model only if the execution requirement is met.

11. Computer program product directly loadable into the internal memory of a digital computer, comprising software code portions for performing the method steps of claim 8 or 10 when said computer program product is run on the computer.
